# EUROPÄISCHE PATENTANMELDUNG

(11) **EP 2 966 403 A1**
(43) Veröffentlichungstag der Anmeldung: **13.01.2016**
(21) Anmeldenummer: 15177262.1
(22) Anmeldetag: 24.05.2011
(51) Int. Cl.: G01C 15/00

(54) **Vorrichtung zur höheneinstellung eines Ständers**

(30) Priorität: 28.06.2010 DE 102010030593
(62) Teilanmeldung aus: 11167201.0
(71) Anmelder: HILTI Aktiengesellschaft, 9494 Schaan (LI)
(72) Erfinder: Lukic, Sasha, 9470 Buchs (CH); Ammann, Manfred, 6923 Lauterach (AT); Emberger, Holger-Max, 79211 Denzlingen (DE); Winter, Andreas, 6800 Feldkirch (AT); John, Andreas, 8892 Berschis (CH)

(57) **Zusammenfassung**

Vorrichtung (1) zur Höheneinstellung eines Ständers (2) in einer Höhenrichtung (15) aus einer Ist-Position (26) in eine Soll-Position (27), wobei der Ständer (2) zur Aufnahme eines Lasergerätes (5) eine Aufnahmeeinrichtung (12) aufweist, die mittels einer automatischen Höheneinstelleinrichtung (16) in der Höhenrichtung (15) verstellbar ist, wobei ein Laserempfänger (3; 51) vorgesehen ist, der über eine Kommunikationsverbindung (4) mit der Höheneinstelleinrichtung (16) verbindbar ist.

## Beschreibung

Die vorliegende Erfindung betrifft eine Vorrichtung zur Höheneinstellung eines Ständers in einer Höhenrichtung gemäß dem Oberbegriff des Anspruchs 1.

Um Nivellier- oder Markierungsarbeiten im Innen- und Außenbereich durchzuführen, sind Lasergeräte bekannt, die punkt- und/oder linienförmige Laserstrahlen erzeugen. Die Laserstrahlen dienen dazu, Referenzpunkte oder Referenzlinien auf Wänden, Decken und Böden anzuzeigen. Bei diesen Lasergeräten wird zwischen Rotationslasern, die einen linienförmigen Laserstrahl durch Rotation einer Laserstrahlquelle oder einer strahlumlenkenden Optik um eine Rotationsachse erzeugen, und Punkt- und/oder Linienlasern, die punkt- und/oder linienförmige Laserstrahlen mittels strahlformender Optiken, wie Zylinderlinsen und Prismen, erzeugen, unterschieden.

Um einen Laserstrahl in einer bestimmten Höhe auf eine Wand zu projizieren, ist es erforderlich, das Lasergerät in der entsprechenden Höhe anzuordnen. Bekannt sind Haltevorrichtungen, mit denen Lasergeräte an einer Wand, einer Wand- oder Deckenschiene, an einem Rohr und/oder einer magnetischen Konstruktion befestigt werden können, sowie Stative, die freistehend auf einen Untergrund positioniert werden. Stative weisen in der Regel einen Stativteller zur Befestigung eines Lasergerätes, einen Stativkopf und drei Stativbeine auf. Über die Länge der Stativbeine und ihre Standposition auf dem Untergrund bzw. den Kippwinkel der Stativbeine kann die Höhe des Stativs verändert werden. Die Höheneinstellung des Stativtellers relativ zum feststehenden Stativkopf erfolgt über eine Zahnstange, die manuell mit Hilfe einer Kurbel verstellt wird. Unter dem Begriff "Ständer" werden sämtliche Haltevorrichtungen und Stative zur Befestigung eines Lasergerätes zusammengefasst.

Bei Lasergeräten, die ohne Schutzmassnahmen, wie Schutzbrillen, eingesetzt werden dürfen, ist die maximal erlaubte Laserleistung begrenzt. Die erlaubten Laserleistungen führen bei Nivellier- und Markierungsarbeiten im Außenbereich häufig zu nicht oder schlecht sichtbaren Laserstrahlen. Um die Sichtbarkeit der Laserstrahlen zu verbessern, werden Laserempfänger in den Laserstrahl gehalten.

Laserempfänger werden als Handgerät von einem Bediener direkt in den Laserstrahl gehalten oder an einer Teleskop- oder Nivellierstange befestigt. Zur Höheneinstellung eines Ständers wird ein Laserstrahl auf eine Detektoreinrichtung des Laserempfängers gerichtet. Mit Hilfe einer Auswerteeinrichtung wird die Differenz der Ist-Position des Laserstrahls zur SollPosition berechnet und vom Laserempfänger optisch und/oder akustisch angezeigt. Der Bediener steuert die Höheneinstelleinrichtung des Ständers mittels einer Bedieneinrichtung bis der Laserstrahl in der Soll-Position angeordnet ist.

Die bekannten Stative mit manueller Höheneinstellung weisen den Nachteil auf, dass die Höheneinstellung des Stativs auf eine gewünschte Höhe, die im Folgenden als Soll-Position bezeichnet wird, vor allem im Außenbereich bei eingeschränkten Sichtbedingungen nicht von einem Bediener alleine durchgeführt werden kann, sondern ein zweiter Bediener erforderlich ist. Der erste Bediener überwacht den Laserempfänger und der zweite Bediener verändert die Höheneinstellung des Stativs solange, bis das Stativ in der Soll-Position angeordnet ist.

Aus US 7,152,334 ist eine motorisch verstellbare Wandhalterung für ein Lasergerät bekannt. Die Wandhalterung umfasst ein erstes Haltemodul, mit dem die Wandhalterung an einer ebenen Wandfläche befestigt wird, und ein zweites Haltemodul zur Aufnahme des Lasergeräts, wobei das zweite Haltemodul relativ zum ersten Haltermodul entlang einer Längsachse verstellbar ist. Das erste Haltemodul besteht aus einem Referenzelement, das an der Wandfläche angebracht wird, und einer Verstellplatte, die mit dem zweiten Haltemodul zusammenwirkt und eine longitudinale Kontaktfläche aufweist. Das zweite Haltemodul umfasst eine Antriebsachse und eine Antriebseinheit, die ein hin und her bewegbares Bewegungselement entlang der Längsachse antreiben. Das Bewegungselement wirkt mit der Kontaktfläche des ersten Haltemoduls zusammen und wird durch die Kontaktfläche geführt. Die Verstellung des zweiten Haltemoduls der Wandhalterung und damit des Lasergerätes relativ zum Referenzelement erfolgt über eine Fernbedienung, die außerdem eine Bedieneinheit zur Fernbedienung des Lasergerätes aufweisen kann. Nachteilig ist, dass der Bediener die Differenz der Ist-Position des Laserstrahls zur Soll-Position erst ablesen und dann die Wandhalterung über die Fernbedienung steuern muss.

DE 202 00 218 U offenbart eine Vorrichtung zur Höheneinstellung eines Ständers in einer Höhenrichtung aus einer Ist-Position in eine Soll-Position. Die Vorrichtung umfasst einen Ständer mit einer Aufnahmeeinrichtung zur Aufnahme eines Rotationslasers und einer automatischen Höheneinstelleinrichtung sowie einen Laserempfänger, der über eine kabellose Kommunikationsverbindung mit der Höheneinstelleinrichtung verbindbar ist. Nachteilig ist, dass die Kommunikation zwischen dem Laserempfänger und der Höheneinstelleinrichtung nur in einer Richtung möglich ist, der Laserempfänger kann nur Steuersignale senden und nicht empfangen. Zwischen dem Rotationslaser und dem Laserempfänger besteht keine Kommunikationsverbindung zur Übertragung von Steuersignalen vom Rotationslaser an den Laserempfänger, der Rotationslaser sendet lediglich ein Messsignal an den Laserempfänger.

Wünschenswert wäre es, eine Vorrichtung zur Höheneinstellung eines Ständers in einer Höhenrichtung hinsichtlich der oben erläuterten Nachteile zu verbessern. Die Aufgabe der vorliegenden Erfindung besteht darin, eine Vorrichtung zur Höheneinstellung eines Ständers in einer Höhenrichtung bereitzustellen, bei der die Automatisierung der Höheneinstelleinrichtung verbessert ist.

Diese Aufgabe wird bei der eingangs genannten Vorrichtung zur Höheneinstellung eines Ständers in einer Höhenrichtung erfindungsgemäß durch die Merkmale des unabhängigen Anspruchs 1 gelöst.

Erfindungsgemäß ist bei der Vorrichtung zur Höheneinstellung eines Ständers in einer Höhenrichtung eine kabellose Kommunikationsverbindung vorgesehen, die eine erste Sende-/Empfangseinheit im Laserempfänger mit einer zweiten Sende-/Empfangseinheit in der Höheneinstelleinrichtung verbindet. Die Höheneinstellung des Ständers kann vollautomatisch vom Laserempfänger durchgeführt werden, wenn der Laserempfänger und die Höheneinstelleinrichtung über die kabellose Kommunikationsverbindung in beiden Richtungen miteinander kommunizieren können. Wenn der Laserstrahl auf den Laserempfänger auftrifft, erstellt der Laserempfänger aus der Differenz zwischen der Ist-Position und der Soll-Position in der Höhenrichtung zur Steuerung der Höheneinstelleinrichtung ein Steuersignal, das über die aktive Kommunikationsverbindung an die Höheneinstelleinrichtung übermittelt wird. Wenn der Laserstrahl nicht auf den Laserempfänger auftrifft, wird eine Suchschleife durchgeführt, bis der Laserstrahl auf die Detektoreinrichtung aufgetroffen ist.

In einer bevorzugten Ausführung ist der Laserempfänger über eine weitere Kommunikationsverbindung mit dem Lasergerät verbindbar. Durch die Einbindung des Lasergerätes in die erfindungsgemäße Vorrichtung kann die Höheneinstellung vollautomatisch durchgeführt werden. Der Bediener muss lediglich den entsprechenden Betriebsmodus am Laserempfänger einschalten. Die Steuerung des Lasergerätes und die Steuerung der Höheneinstelleinrichtung erfolgt über den Laserempfänger.

In einer bevorzugten Ausführung sind die Kommunikationsverbindung zwischen dem Laserempfänger und der Höheneinstelleinrichtung und/oder die weitere Kommunikationsverbindung zwischen dem Laserempfänger und dem Lasergerät über eine Schalteinrichtung zwischen einem aktiven Zustand und einem deaktiven Zustand schaltbar.

Bevorzugt ist der Laserempfänger zwischen einem ersten Betriebsmodus und einem zweiten Betriebsmodus umschaltbar. Der Laserempfänger kann im ersten Betriebsmodus zusammen mit der Höheneinstelleinrichtung zur automatischen Höheneinstellung und im zweiten Betriebsmodus beispielsweise wie ein herkömmlicher Laserempfänger zur optischen und/oder akustischen Anzeige eines Laserstrahls eingesetzt werden.

In einer bevorzugten Ausführung weisen der Laserempfänger und/oder die Höheneinstelleinrichtung einen Mikrocontroller auf, wobei der Mikrocontroller aus einer Differenz der Ist-Position zur Soll-Position ein Steuersignal zur Steuerung der Höheneinstelleinrichtung in der Höhenrichtung erstellt. Die Steuerung der Höheneinstelleinrichtung erfolgt automatisch über einen Mikrocontroller, der in den Laserempfänger oder in die Höheneinstelleinrichtung integriert ist.

Ausführungsbeispiele der Erfindung werden nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematischer und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, der Zeichnung sowie den Ansprüchen offenbarten Merkmale der Erfindung können sowohl einzeln für sich als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei gegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Weitere Vorteile, Merkmale und Einzelheiten der Erfindung ergeben sich aus der nachfolgenden Beschreibung der bevorzugten Ausführungsbeispiele sowie anhand der Zeichnung.

Es zeigen:
- Fig. 1: eine erste Ausführungsform einer erfindungsgemäßen Vorrichtung zur Höheneinstellung eines Ständers mit einem Laserempfänger und einem Stativ;
- Fig. 2: das Zusammenwirken des Laserempfängers und des Stativs der Fig. 1 als Blockdiagramm;
- Fig. 3: ein Verfahren zur Höheneinstellung eines Ständers mit der erfindungsgemäßen Vorrichtung der Fig. 1; und
- Fig. 4: eine zweite Ausführungsform einer erfindungsgemäßen Vorrichtung zur Höheneinstellung eines Ständers mit einem Laserempfänger, der über Kommunikationsverbindungen mit einem Stativ und einem Lasergerät verbunden ist.

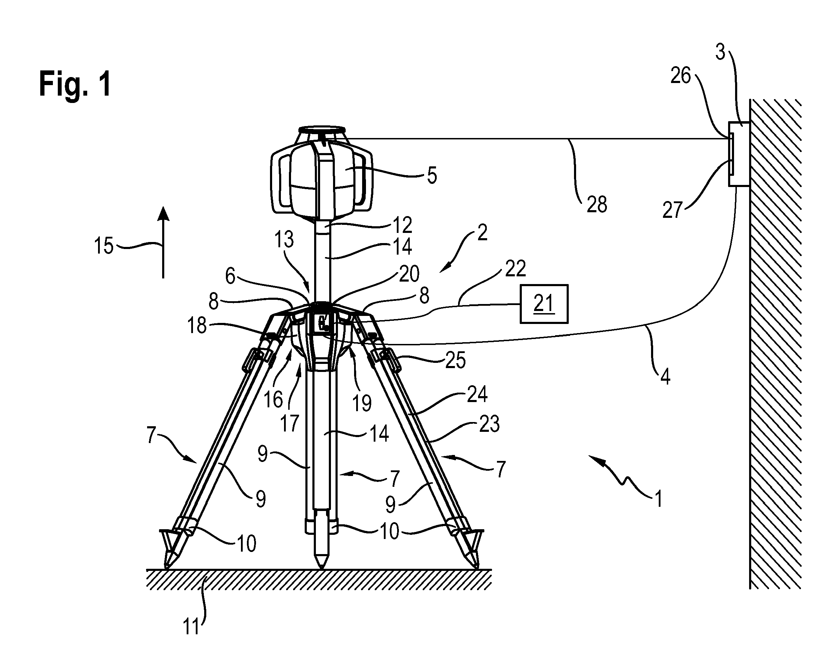

Fig. 1 zeigt eine erste Ausführungsform einer erfindungsgemäßen Vorrichtung 1 zur Höheneinstellung eines Ständers, der in Form eines höhenverstellbaren Stativs 2 ausgebildet ist. Die Vorrichtung 1 umfasst einen Laserempfänger 3, der über eine kabellose Kommunikationsverbindung **4,** beispielsweise in Form einer Funk- oder Infrarotverbindung, mit dem Stativ 2 verbunden ist.

Das Stativ 2 ist in einer Standstellung mit einem auf dem Stativ 2 befestigten Lasergerät **5** dargestellt. Das Stativ 2 ist zwischen der Standstellung, in der das Lasergerät 5 zu Nivellierund Markierungsarbeiten einsetzbar ist, und einer Transportstellung, die zum Transport und zur Aufbewahrung des Stativs 2 dient, verstellbar. Das Stativ 2 umfasst einen Stativkopf **6** und drei Stativbeine **7,** die identisch ausgebildet und mit dem Stativkopf 6 über Kippgelenke **8** verbunden sind. Die Stativbeine 7 sind innerhalb eines Winkelbereichs mittels der Kippgelenke 8 relativ zum Stativkopf 6 verschwenkbar. Die Stativbeine 7 bestehen aus einem oberen Beinabschnitt **9,** der als Rohr oder Profil ausgebildet und mit dem Kippgelenk 8 verbunden ist, und einem unteren Beinabschnitt **10,** der als Stativfuß ausgebildet ist und auf einen Untergrund **11** aufgesetzt wird. Abhängig vom Untergrund 11 können die Stativbeine 7 unterschiedliche Stativfüße 10 aufweisen, um einen sicheren Stand des Stativs 2 auf dem Untergrund 11 zu gewährleisten.

Das Lasergerät 5 ist lösbar auf einer verstellbaren Aufnahmeeinrichtung **12,** die als Stativteller ausgebildet ist, befestigt. Alternativ kann die Aufnahmeeinrichtung als Gewindestange ausgebildet sein, die in ein entsprechendes Gewinde des Lasergerätes eingedreht wird, um das Lasergerät 5 auf dem Stativ 2 zu befestigen. Der Stativteller 12 ist auf der dem Untergrund 11 abgewandten Seite des Stativkopfes 6, die als Oberseite **13** des Stativkopfes 6 bezeichnet wird, angeordnet und mit einer Führungseinrichtung **14** verbunden. Die Führungseinrichtung ist als Zahnstange 14 ausgebildet und in einer Richtung parallel zur Längserstreckung der Zahnstange 14, die als Höhenrichtung **15** bezeichnet wird, zwischen einer unteren Endposition und einer oberen Endposition verstellbar. In der unteren Endposition ist der Abstand zwischen dem Stativteller 12 und dem Stativkopf 6 minimal und in der oberen Endposition ist der Abstand zwischen dem Stativteller 12 und dem Stativkopf 6 maximal.

Die Höheneinstellung des Stativtellers 12 in der Höhenrichtung 15 relativ zum Stativkopf 6 erfolgt über eine automatische Höheneinstelleinrichtung **16,** die auf einer den Stativbeinen 7 zugewandten Seite des Stativkopfes 6, die als Unterseite **17** bezeichnet wird, angeordnet ist. Die Höheneinstelleinrichtung 16 besteht aus einem Gehäuse **18,** einer in dem Gehäuse 18 angeordneten Antriebseinheit **19** und einer Bedienungseinrichtung **20,** die in das Gehäuse 18 integriert und von außen bedienbar ist. Neben der in das Gehäuse 18 integrierten Bedienungseinrichtung 20 ist eine weitere Bedienungseinrichtung in Form einer Fernbedienungseinrichtung **21** vorgesehen, die über eine kabellose Kommunikationsverbindung **22,** beispielsweise in Form einer Funk- oder Infrarotverbindung, mit der Antriebseinheit 19 verbunden ist. Die Antriebseinheit 19 ist beispielsweise als Motorantrieb, hydraulischer Antrieb oder pneumatischer Antrieb ausgebildet. Die Stromversorgung der Höheneinstelleinrichtung 16 erfolgt über Einweg- oder wiederaufladbare Batterien, die in ein Batteriefach im Gehäuse 18 der Höheneinstelleinrichtung 16 eingesetzt werden. Zusätzlich kann ein Ladeanschluss zur Verbindung eines Stromkabels vorgesehen sein.

Die maximale Höhe des Stativs 2 in der Höhenrichtung 15 ist von der Länge und der Standposition der Stativbeine 7 sowie der Länge der Führungseinrichtung 14 abhängig. Aus Stabilitätsgründen sollte die Führungseinrichtung 14 nicht zu lang ausgebildet sein. Um den Höhenbereich des Stativs 2 zu erweitern, bestehen die Stativbeine 7 aus einem äußeren Profilabschnitt **23** und einem inneren Profilabschnitt **24,** die teleskopartig ineinander verschiebbar ausgebildet sind. Die Profilabschnitte 23, 24 sind über eine Klemmeinrichtung **25,** die in Form eines Klemmhebels ausgebildet ist, gegeneinander klemmbar. Die Höhe des Stativs 2 wird über die verstellbaren Stativbeine 7 grob auf die gewünschte Höhe eingestellt. Die exakte Einstellung des Stativs 2 auf die gewünschte Position erfolgt mit Hilfe der Höheneinstelleinrichtung 16.

Fig. 1 zeigt ein Stativ 2, bei dem die Höheneinstellung in einer Richtung 15, die in etwa senkrecht zum Boden verläuft, erfolgt. Alternativ kann die Höheneinstellung in jeder beliebigen Richtung, die durch die Anordnung der Führungseinrichtung 14 bestimmt ist, erfolgen. Bei einer Wandbefestigung kann die Führungseinrichtung beispielsweise waagerecht angebracht sein und die Höheneinstellung in waagerechter Richtung erfolgen.

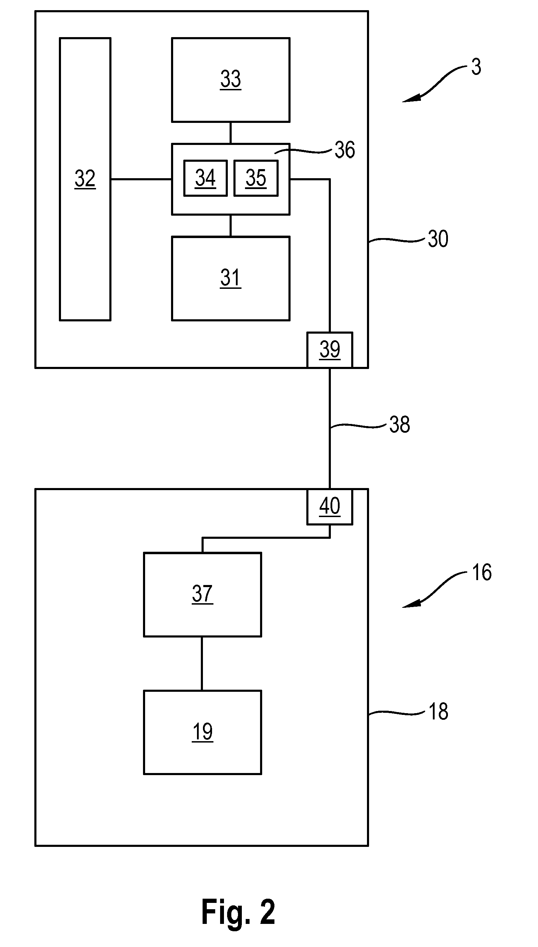

Die Höheneinstellung des Stativs 2 aus einer Ist-Position **26** in eine gewünschte Soll-Position **27** erfolgt über einen Regelkreis zwischen dem Stativ 2 und dem Laserempfänger 3 mit Hilfe eines Laserstrahls **28,** der von dem Lasergerät 5 in der Ist-Position 26 ausgesandt wird. **Fig. 2** zeigt die wesentlichen Komponenten des Laserempfängers 3 und der Höheneinstelleinrichtung 16, die die Höheneinstellung des Stativs 2 regeln, schematisch in Form eines Blockdiagramms.

Der Laserempfänger 3 umfasst ein Gehäuse **30,** in das eine Bedienungseinrichtung **31,** eine Detektoreinrichtung **32** zur Detektion des Laserstrahls 28 und eine Anzeigeeinrichtung **33** integriert sind. Die Detektoreinrichtung 32 und die Anzeigeeinrichtung 33 sind mit einer Auswerteeinrichtung **34** verbunden, die die Differenz zwischen der Ist-Position 26 und der SollPosition 27 bestimmt. Die Auswerteeinrichtung 34 ist mit einer Steuereinrichtung **35** zur Steuerung des Laserempfängers 3 verbunden, wobei die Auswerte- und Steuereinrichtungen 34, 35 in einen Mikrocontroller **36** integriert sind. Die Höheneinstelleinrichtung 16 des Stativs 2 umfasst die Antriebseinheit 19 und eine Steuereinrichtung **37** in Form eines Mikrocontrollers zur Steuerung der Höheneinstelleinrichtung 16. Die Kommunikation zwischen dem Laserempfänger 3 und der Höheneinstelleinrichtung 16 erfolgt über eine kabellose Kommunikationsverbindung **38,** die eine erste Sende-/Empfangseinheit **39** im Laserempfänger 3 mit einer zweiten Sende-/Empfangseinheit **40** in der Höheneinstelleinrichtung 16 verbindet.

Im Mikrocontroller 36 des Laserempfängers 3 ist eine Referenzmarke hinterlegt. Die SollPosition 27, in der das Stativ 2 angeordnet werden soll, kann die Referenzmarke sein. Alternativ kann die Soll-Position 27 als Offset zur Referenzmarke vom Bediener in Form eines numerischen Wertes über die Bedienungseinrichtungen 31 eingegeben werden.

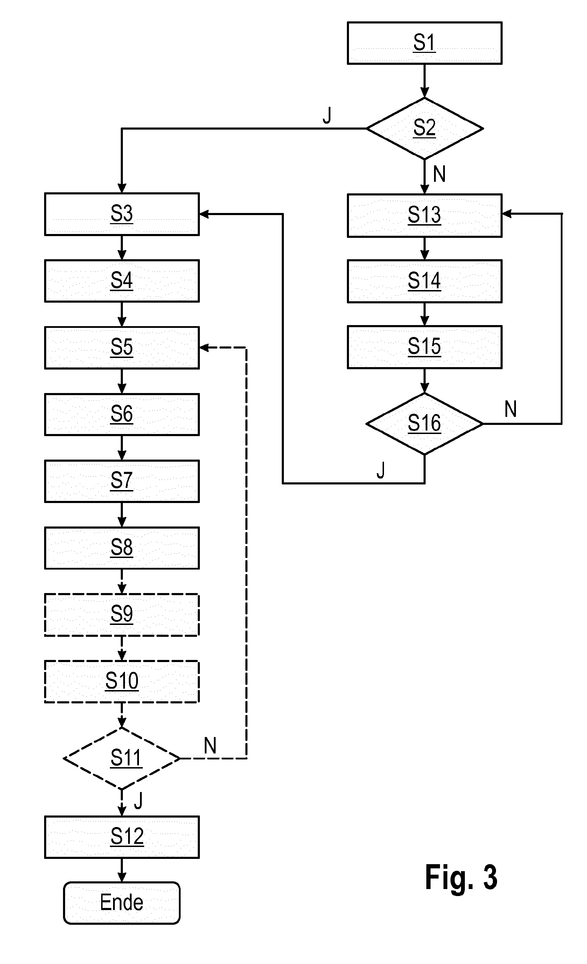

**Fig. 3** zeigt ein Verfahren zur Höheneinstellung des Stativs 2 mit Hilfe der erfindungsgemäßen Vorrichtung 1. Das Stativ 2 ist beispielsweise so ausgelegt, dass die Zahnstange 14 beim Ausschalten oder spätestens beim Einschalten des Stativs 2 in die untere Endposition verfahren wird. Der Bediener passt die Länge und die Standposition der Stativbeine 7 so an, dass der Laserstrahl 28 in der unteren Endposition der Zahnstange 14 im Bereich des Laserempfängers 3 unterhalb der Detektoreinrichtung 32 angeordnet ist.

In einem Schritt **S1** startet der Bediener den Laserempfänger 3 und das Lasergerät 5, das den Laserstrahl 28 aussendet. In einem Schritt **S2** wird geprüft, ob der Laserstrahl 28 auf die Detektoreinrichtung 32 aufgetroffen ist. Ist der Laserstrahl 28 auf die Detektoreinrichtung 32 aufgetroffen (J in S2), wird in einem Schritt **S3** ein entsprechendes Signal von der Detektoreinrichtung 32 an den Mikrocontroller 36 des Laserempfängers 3 übermittelt. Der Mikrocontroller 36 berechnet in einem Schritt **S4** die Differenz der Ist-Position 26 zur Soll-Position 27 in Höhenrichtung 15 und übermittelt in einem Schritt **S5** ein der Differenz entsprechendes Steuersignal über die Kommunikationsverbindung 38 und die Sende-/Empfangseinheiten 39, 40 an die Steuereinrichtung 37 des Stativs 2. Die Steuereinrichtung 37 erteilt in einem Schritt **S6** entsprechend dem Steuersignal einen Befehl an die Antriebseinheit 19, die die Zahnstange 14 in einem Schritt **S7** in der Höhenrichtung 15 um die Differenz in die Soll-Position 27 bewegt. In einem Schritt **S8** übermittelt die Steuereinrichtung 37 ein Signal an den Mikrocontroller 36 des Laserempfängers 3, dass die Höheneinstellung des Stativs 2 beendet ist.

Die Höheneinstellung des Stativs 2 kann an dieser Stelle beendet sein oder die Genauigkeit der Höheneinstellung in einer Kontrollschleife geprüft werden. Die Kontrollschleife ist in Fig. 3 gestrichelt dargestellt. Um die Genauigkeit der Höheneinstellung zu prüfen, muss sichergestellt sein, dass der Laserstrahl 28 während der Höheneinstellung durchgehend ausgesandt wird oder dass der Laserstrahl 28 erneut ausgesandt wird. In einem Schritt **S9** wird ein der aktuellen Ist-Position 26 des Laserstrahls 28 entsprechendes Signal von der Detektoreinrichtung 32 an den Mikrocontroller 36 übermittelt. In einem Schritt **S10** wird die Differenz der Ist-Position 26 zur Soll-Position 27 berechnet und in einem Schritt **S11** geprüft, ob eine erlaubte Abweichung nicht überschritten wird. Ist die Differenz größer als die erlaubte Abweichung (N in S11), wird das Verfahren mit Schritt S5 fortgesetzt. Ist die Differenz kleiner als die erlaubte Abweichung (J in S11), wird in einem Schritt **S12** das Ende der Höheneinstellung auf der Anzeigeeinrichtung 33 angezeigt. Das Verfahren zur Höheneinstellung des Stativs 2 ist nach Schritt S12 beendet.

Wird die Kontrollschleife der Schritte S9 bis S11 zur Überprüfung der Genauigkeit der Höheneinstellung nicht durchgeführt, wird das Verfahren zur Höheneinstellung des Stativs 2 nach Schritt S8 mit der Anzeige auf der Anzeigeeinrichtung 33, dass die Höheneinstellung beendet ist (Schritt S12), abgeschlossen.

Wenn der Laserstrahl 28 nicht auf die Detektoreinrichtung 32 aufgetroffen ist (N in S2), übermittelt der Mikrocontroller 36 des Laserempfängers 3 in einem Schritt **S13** ein entsprechendes Signal an die Steuereinrichtung 37 der Höheneinstelleinrichtung 16 des Stativs 2. Die Steuereinrichtung 37 erteilt in einem Schritt **S14** einen Befehl an die Antriebseinheit 19, die die Zahnstange 14 in einem Schritt **S15** nach oben verfährt. Dabei bedeutet "oben", dass die Zahnstange 14 vom Untergrund 11, auf den das Stativ 2 aufgesetzt ist, in der Höhenrichtung 15 wegbewegt wird. In einem Schritt **S16** geprüft, ob der Laserstrahl 28 auf die Detektoreinrichtung 32 aufgetroffen ist. Ist der Laserstrahl 28 auf die Detektoreinrichtung 32 aufgetroffen (J in S16), wird das Verfahren mit Schritt S3 fortgesetzt. Wenn der Laserstrahl 28 nicht auf die Detektoreinrichtung 32 aufgetroffen ist (N in S16), wird das Verfahren zur Höheneinstellung des Stativs 2 mit Schritt S13 fortgesetzt.

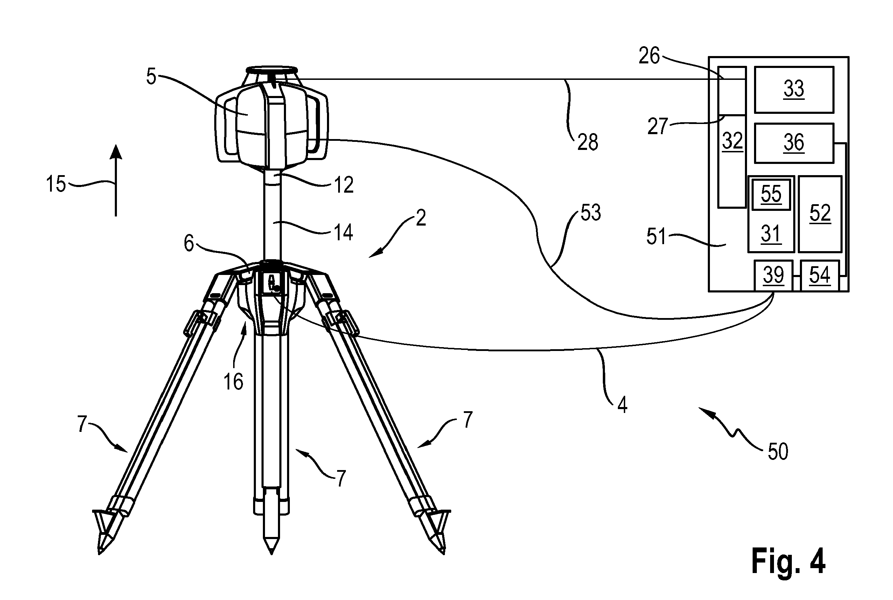

**Fig. 4** zeigt eine zweite Ausführungsform einer erfindungsgemäßen Vorrichtung **50** zur Höheneinstellung des Stativs 2 mit einem Laserempfänger **51,** der über die Kommunikationsverbindung 4 mit der Höheneinstelleinrichtung 16 verbunden ist. Der Laserempfänger 51 unterscheidet sich vom Laserempfänger 3 der Fig. 2 dadurch, dass neben den Komponenten 31, 32, 33, 36 eine Fernbedienungseinrichtung **52** zur Bedienung des Lasergerätes 5 im Laserempfänger 51 vorgesehen ist. Der Laserempfänger 51 ist über eine weitere Kommunikationsverbindung **53** mit dem Lasergerät 5 verbunden.

In der Ausführung der Fig. 4 sind die Kommunikationsverbindungen 4, 53 mit der ersten Sende-/Empfangseinheit 39 im Laserempfänger 51 verbunden. Alternativ können die Kommunikationsverbindungen 4, 53 über verschiedene Sende-/Empfangseinheiten mit dem Laserempfänger 51 verbunden sein. Die Sende-/Empfangseinheit 39 ist mit einer Schalteinrichtung **54** verbunden, die die Kommunikationsverbindungen 4, 53 zwischen dem Laserempfänger 51 und der Höheneinstelleinrichtung 16 und zwischen dem Laserempfänger 51 und dem Lasergerät 5 aktivieren bzw. deaktivieren kann.

Der Laserempfänger 51 ist über einen Modusschalter **55** zwischen einem ersten Betriebsmodus, einem zweiten Betriebsmodus und einem dritten Betriebsmodus schaltbar. Im ersten Betriebsmodus dient der Laserempfänger 51 wie in Fig. 3 beschrieben zur Höheneinstellung, im zweiten Betriebsmodus zur optischen und/oder akustischen Anzeige eines Laserstrahls und im dritten Betriebsmodus zur Fernbedienung des Lasergerätes 5.

Im ersten Betriebsmodus ist der Laserempfänger 51 ein Teil der erfindungsgemäßen Vorrichtung 50 zur Höheneinstellung des Stativs 2. Die Kommunikationsverbindung 4 zwischen dem Laserempfänger 51 und der Höheneinstelleinrichtung 16 ist aktiviert und der Mikrocontroller 36 des Laserempfängers 51 erstellt zur Steuerung der Höheneinstelleinrichtung 16 ein der Differenz zwischen der Ist-Position 26 und der Soll-Position 27 entsprechendes Steuersignal, das über die aktive Kommunikationsverbindung 4 an die Höheneinstelleinrichtung 16 übermittelt wird. Alternativ wird die Differenz über die aktive Kommunikationsverbindung 4 an den Mikrocontroller 37 der Höheneinstelleinrichtung 16 übermittelt und der Mikrocontroller 37 erstellt ein entsprechendes Steuersignal zur Steuerung der Antriebseinheit 19.

Durch die Einbindung des Lasergerätes 5 in die erfindungsgemäße Vorrichtung 50 kann das Verfahren zur Höheneinstellung weiter automatisiert werden. Nach dem Einschalten des ersten Betriebsmodus werden die Kommunikationsverbindungen 4, 53 zwischen dem Laserempfänger 51 und der Höheneinstelleinrichtung 16 und zwischen dem Laserempfänger 51 und dem Lasergerät 5 aktiviert. Der Mikrocontroller 36 übermittelt ein Steuersignal an das Lasergerät 5, die Schockfunktion des Lasergerätes 5 zu deaktivieren und den Laserstrahl 28 auszusenden. Der Mikrocontroller 36 kommuniziert über die Kommunikationsverbindung 53 direkt mit dem Lasergerät 5 und steuert das Lasergerät 5 entsprechend. Die Höheneinstellung kann mit der Vorrichtung 50 vollautomatisch durchgeführt werden, der Bediener muss nur den ersten Betriebsmodus einstellen.

Der Laserempfänger 51 wird nach dem Ende der automatischen Höheneinstellung aus dem ersten Betriebsmodus in den zweiten Betriebsmodus umgeschaltet. Im zweiten Betriebsmodus arbeitet der Laserempfänger 51 als Anzeigeeinrichtung zur optischen und/oder akustischen Anzeige des Laserstrahls 28. Die Kommunikationsverbindungen 4, 53 zwischen dem Laserempfänger 51 und der Höheneinstelleinrichtung 16 und zwischen dem Laserempfänger 51 und dem Lasergerät 5 sind deaktiviert. Der Laserempfänger 51 zeigt den Laserstrahl 28 und die Differenz der Ist-Position 26 zur Soll-Position 27 auf der Anzeigeeinrichtung 33 optisch und/oder akustisch an.

Im dritten Betriebsmodus dient der Laserempfänger 51 zur Fernbedienung des Lasergerätes 5. Die Kommunikationsverbindung 4 zwischen dem Laserempfänger 51 und der Höheneinstelleinrichtung 16 ist deaktiviert und die Kommunikationsverbindung 53 zwischen dem Laserempfänger 3 und dem Lasergerät 5 ist aktiviert. Die Eingaben in die Fernbedienungseinrichtung 52 des Laserempfängers 51 werden über die Kommunikationsverbindung 53 an das Lasergerät 5 übertragen.

## Patentansprüche

1. Vorrichtung (1) zur Höheneinstellung eines Ständers (2) in einer Höhenrichtung (15) aus einer Ist-Position (26) in eine Soll-Position (27), aufweisend den Ständer (2) mit einer Aufnahmeeinrichtung (12) zur lösbaren Befestigung eines Lasergerätes (5) und einer automatischen Höheneinstelleinrichtung (16) zur Höheneinstellung des Ständers (2) in der Höhenrichtung (15) und einen Laserempfänger (3; 51), der über eine kabellose Kommunikationsverbindung (4; 38) mit der Höheneinstelleinrichtung (16) verbindbar ist, **dadurch gekennzeichnet, dass** die Kommunikationsverbindung (4; 38) eine erste Sende-/Empfangseinheit (39) im Laserempfänger (3; 51) mit einer zweiten Sende-/Empfangseinheit (40) in der Höheneinstelleinrichtung (16) verbindet.

2. Vorrichtung nach Anspruch 1, **dadurch gekennzeichnet, dass** der Laserempfänger (51) über eine weitere Kommunikationsverbindung (53) mit dem Lasergerät (5) verbindbar ist.

3. Vorrichtung nach einem der Ansprüche 1 bis 2, **dadurch gekennzeichnet, dass** die Kommunikationsverbindung (4) zwischen dem Laserempfänger (3; 51) und der Höheneinstelleinrichtung (16) und/oder die weitere Kommunikationsverbindung (53) zwischen dem Laserempfänger (51) und dem Lasergerät (5) über eine Schalteinrichtung (54) zwischen einem aktiven Zustand und einem deaktiven Zustand schaltbar sind.

4. Vorrichtung nach einem der Ansprüche 1 bis 3, **dadurch gekennzeichnet, dass** der Laserempfänger (51) zwischen einem ersten Betriebsmodus und einem zweiten Betriebsmodus umschaltbar ist.

5. Vorrichtung nach einem der Ansprüche 1 bis 4, **dadurch gekennzeichnet, dass** der Laserempfänger (3; 51) und/oder die Höheneinstelleinrichtung (16) einen Mikrocontroller (36, 37) aufweisen, wobei der Mikrocontroller (36, 37) aus einer Differenz der Ist-Position (26) zur Soll-Position (27) ein Steuersignal zur Steuerung der Höheneinstelleinrichtung (16) in der Höhenrichtung (15) erstellt.
